# EUROPEAN PATENT SPECIFICATION

(11) **EP 0 926 057 B1**
(45) Date of publication and mention of the grant of the patent: **07.04.2004**
(21) Application number: 98310338.3
(22) Date of filing: 16.12.1998
(51) Int. Cl.: B62M 11/00, B62M 11/16

(54) **Multi-speed hub gears**
Mehrgangnabe für Fahrräder
Moyeu à vitesses multiples

(30) Priority: 17.12.1997 GB 9726521
(43) Date of publication of application: 30.06.1999
(73) Proprietor: Sunrace Sturmey-Archer, Inc., Hai Hu Village, Lu Chu Hsian, Tao Yuan Hsien (TW)
(72) Inventor: Rickels, Stephen Terence, Woodthorpe, Nottingham NG5 4LA (GB)
(74) Representative: Downey, William Gerrard

(56) References cited:
- CH-A- 393 952
- GB-A- 2 320 069

## Description

The invention relates to a multi-speed hub in which means are provided for selectively coupling and uncoupling at least one component part of a multi-speed hub gear to its spindle to lock and unlock the rotation of that component with respect to the spindle.

By this selective coupling and uncoupling, different gear ratios can be selected in the multi-speed hub gear.

The advantages of this selection method can be described by looking at its use in an epicyclic change gear system.

It is known in the art to provide five and seven speed epicyclic change speed gear hubs for a bicycle by utilising compound planet gears engaged with a common gear ring and each cooperable with a respective sun gear selectively engageable therewith in drive transmission mode.

The planet cage of the aforesaid arrangement is connectable with the hub shell, so as to provide a drive transmission from the planet cage to the hub shell according to hub condition, by means of radially or axially movable pawls mounted in the planet cage and cooperable with ratchet teeth provided in hub end cap. The gear ring is connectable with the hub shell through radial pawls.

It is also known from our Patent EP 0 686 113 B1 and European Patent Application 95918691.7 (published as EP-A-0 762 968) for a sun gear to be axially fixed with respect to the spindle and to provide a gear selector key movable axially of the spindle for selective engagement with a respective one of the sun gears so as to non-rotatably secure that sun gear to the spindle.

An object of one embodiment of the present invention is to improve the method of selective engagement of these sun gears to non-rotatably secure these to the spindle.

According to one aspect of the present invention, there is provided a multi-speed hub gear comprising a spindle, one or more members mounted on the spindle and means for locking the or one of the members with respect to the spindle, said means comprising one or more balls disposed in respective holes in the spindle and a spool disposed for axial movement with respect to the spindle and operative, in one position, to displace the or each ball in the or each respective hole from a non-locking to a locking position in which the member is non-rotatably locked with respect to the spindle characterised in that the or each hole in the spindle is tapered over a substantial portion so that the diameter of the hole increases in the direction radially outwards from the spindle axis.

According to another aspect of the present invention there is provided a multi-speed hub gear comprising a spindle (4), one or more members (1,2,3) mounted on the spindle (4) and means for locking (9) the or one of the members with respect to the spindle, said means comprising one or more balls (9) disposed in respective holes (8) in the spindle and a spool (14) disposed for axial movement with respect to the spindle (4) and operative, in one position, to displace the or each ball (9) in the or each respective hole (8) from a non-locking to a locking position in which the member is non-rotatably locked with respect to the spindle (4) characterised in that the or each hole is drilled at an angle to the radial direction to the spindle

In a preferred embodiment of the invention, the spindle may be formed with an axially extending bore in which the spool is disposed for axial movement. Advantageously the spool has a portion of larger diameter which is operative to contact the or each ball to displace it. Where there is more than one member a respective ball or respective group of balls is/are disposed in corresponding holes in the spindle for engaging with respective members, one hole/group of holes being coincident axially with each member. In the case of one or more groups of balls corresponding to respective members there are advantageously three balls in the or each group equiangularly spaced from one another.

With the taper, the resultant reaction forces, in a locked position of the member, from the member on the ball radially inwards onto the spool are reduced as compared with forces which would be experienced with non-tapered hole. By altering the angle of taper in the hole, the resultant forces between the member and the ball, the spindle and the ball and the spool and ball can be adjusted to give the different values. A suitable included taper angle may be of the order of 60°. The ability to be able to do this is important because the contact areas between the member and ball, the spindle and ball and the spool and ball are different and hence the forces on each will be different. There is a line contact between the member and the ball and the spindle and ball because a concave surface butts up against a convex surface. Between the spool and the ball there is a point contact because a spherical, convex surface butts up against a cylindrical, convex surface. This means that with a hole, without taper, the spool will be more heavily loaded.

The angle of the tapered hole is such that the force from the ball onto the spool is reduced but at the same time the force from the ball onto the member and the spindle will not be self locking in the manner of a sprag clutch. Reducing the force on the spool is important to prevent indentation or breakage of the spool. The reduction in force on the spool is also advantageous in making it easier to move the selector spool member axially and hence change gear more easily. Because the selector spool member is comparatively small better quality materials can be used without incurring high material costs.

The minor diameter of the tapered hole may be smaller than the ball to prevent the balls that are not under load from entering the bore of the spindle and interfering with the axial movement of the gear selector assembly. This will also assist the assembly of the balls to the axle as the balls can be fitted before the gear selector assembly.

The direction of reaction torque on the axle changes depending on whether the gear box is selected to give a gear increase or a gear decrease. The tapered hole takes account of this but if the torque reaction was always in the same direction the same adjustment of forces could be achieved by using a plain diameter hole machined into the spindle at an angle consistent with the adjustment of forces required.

The axial movement of the gear selector assembly can be achieved as described or in a similar manner to selector keys that were the subject of patent EP O 686 113BI.

In the inventions of EP 0 686 113B1 and EP-A-0 180 076 the sun pinions have been non-rotatably locked to the spindle using an adaptation of a key and keyways in the spindle and the sun pinions. The key is moved axially to selectively lock one sun pinion at any one time.

It is important that only one sun pinion is locked at any time otherwise the hub would be damaged due to the extreme forces that would be generated as a result of the large mechanical advantage created by locking more than one sun pinion. It is also important that a neutral position is not present between the point when the key leaves one sun pinion and before enters the next sun pinion. The neutral position is avoided by adding ramps to the key to selectively urge the key axially into one of the adjacent sun pinions. This is described in EP-A-0 180 076.

One of the drawbacks of this method is that key and keyways can be damaged in operation if adjustments to the hub are incorrect or move in service. Damage can also occur if the gear changing is carried out under a heavy drive load without allowing time for the key to fully change position. The affect of these errors will lead to errors in the axial position of the axle key in the spindle leading to partial engagement of the key in the sun pinion key way.

With only partial engagement of the key in the sun pinion the surface pressure between the key and the sun pinion will increase and may exceed the ultimate strength of the material causing the corners of the key or the sun pinion keyway to fail. Gradual erosion of the corners of the key and keyways will eventually lead to slipping of the gear drive and even a neutral position occurring eventually.

The application of the present invention in epicyclic change speed gear systems overcomes these problems because the wear and the rounding off of corners that could cause problems with the keys and keyways cannot happen as there are no edges and corners to be damaged. This makes the components more robust and therefore the new arrangement should be more tolerant of poor adjustment and changing gear under drive load.

The elimination of neutral positions is also important and the invention addresses this by incorporating angled end faces to the selector spool member so that the radially inward forces from the balls can be used to urge the selector spool to lock one or other of the sun pinions adjacent to the neutral position. In addition or alternatively the holes are chamfered to allow the or each corresponding ball to move axially.

To avoid the selector spool member becoming trapped the angled end faces are made different to preferentially drive the spool in one direction.

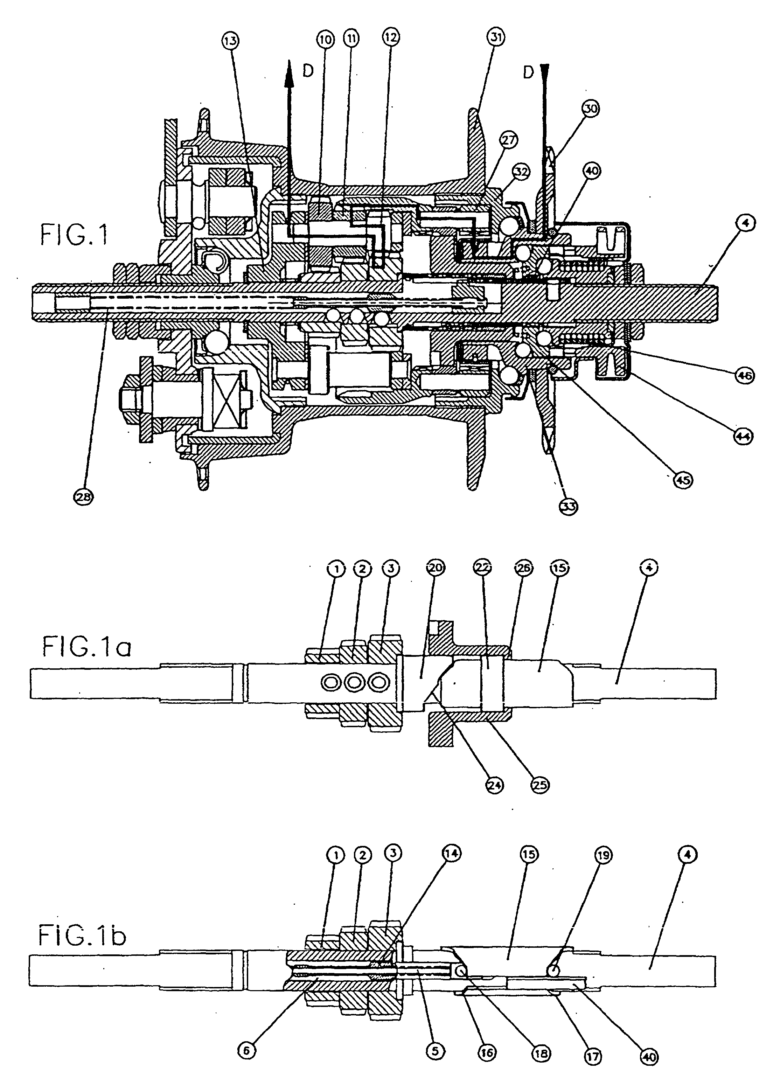

In order that the invention may be more clearly understood an embodiment thereof will now be described, by way of example, with reference to the accompanying drawings, in which:-
Figure 1 shows, in section an epicyclic change speed gear system according to the invention, with the system disposed in a first gear,
Figure 1 a shows a part of the system of figure 1 in partial section,
Figure 1b also shows a part of the system of figure 1 in partial section,
Figures 2, 2a and 2b correspond respectively to figures 1, 1a and 1b, but for the gear system in a second gear,
Figures 3, 3a and 3b correspond respectively to figures 1, 1a and 1b, but for the gear system in a third gear,
Figures 4, 4a and 4b correspond respectively to figures 1, 1a and 1b, but for the gear system in a fourth gear,
Figures 5, 5a and 5b correspond respectively to figures 1, 1a and 1b, but for the gear system in a fifth gear,
Figures 6, 6a and 6b correspond respectively to figures 1, 1a and 1b, but for the gear system in a sixth gear,
Figures 7, 7a and 7b correspond respectively to figures 1, 1a and 1b, but for the gear system in a seventh gear,
Figure 8a shows a gear selector assembly forming part of the system of figure 1 in more detail by means of an isometric view,
Figure 8b shows a side elevational view in section of the gear selector assembly of figure 8a,
Figure 9a shows a cross sectional view through the spindle, one sun pinion, balls and selector spool for the condition when the sun pinion is locked to the spindle,
Figure 9b shows a cross sectional view through the spindle, one sun pinion, balls and selector spool for the condition when the sun pinion is free to rotate on the spindle,
Figure 10a shows an axial cross section through the spindle showing the selector spool correctly locking gear component B,
Figure 10b shows an axial cross section through the spindle showing the selector spool at the point of locking component B,
Figure 11a corresponds to figure 9a but for an alternative to the arrangement in figure 9a, and
Figure 11b also corresponds to figure 9a but for a further alternative to the arrangement shown in figure 9a.

Referring to figures 1, 1a and 1b, the epicyclic change speed gear hub assembly comprises member in the form of sun pinions, 1,2 and 3 freely rotatably mounted in side-by-side disposition on a fixed spindle 4. These sun pinions may be selectively locked relative to the spindle 4 by means of a gear selector assembly 5 movable axially in bore 6 formed in the spindle 4 in order to provide reaction members. In figures 1, 1 a and 1b, the gear selector assembly 5 is shown in a position in which it locks the sun pinion 3 relative to the spindle 4, the other sun pinions 1 and 2 being free to rotate on the spindle 4. Planet pinions 10, 11 and 12 rotatably mounted in a planet cage assembly indicated generally by the reference numeral 13 mesh respectively with sun pinions 1, 2 and 3. The assembly also comprises a gear ring 27 which is operatively connected to an output member or input member and a clutch operative to connect the input member to the planet cage or the input member to the gear ring.

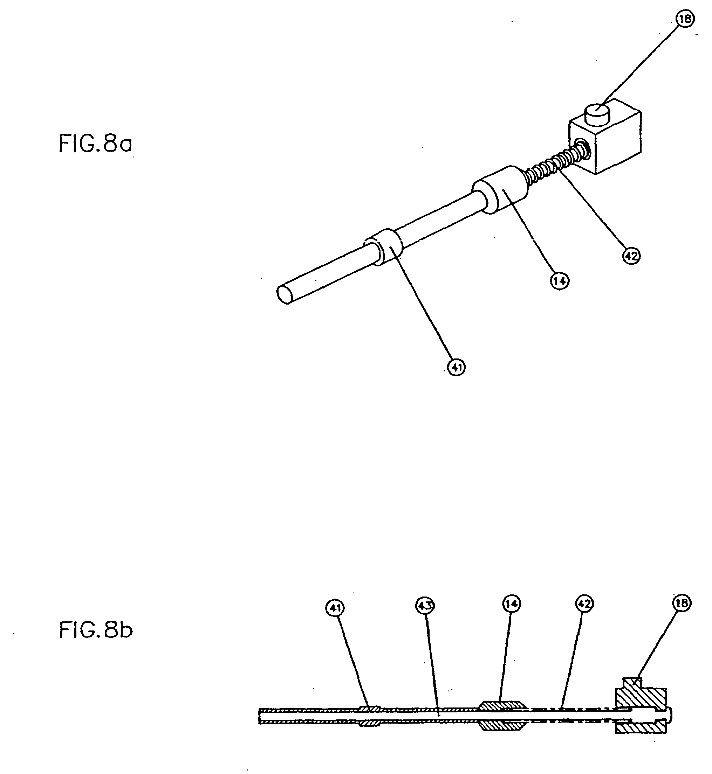

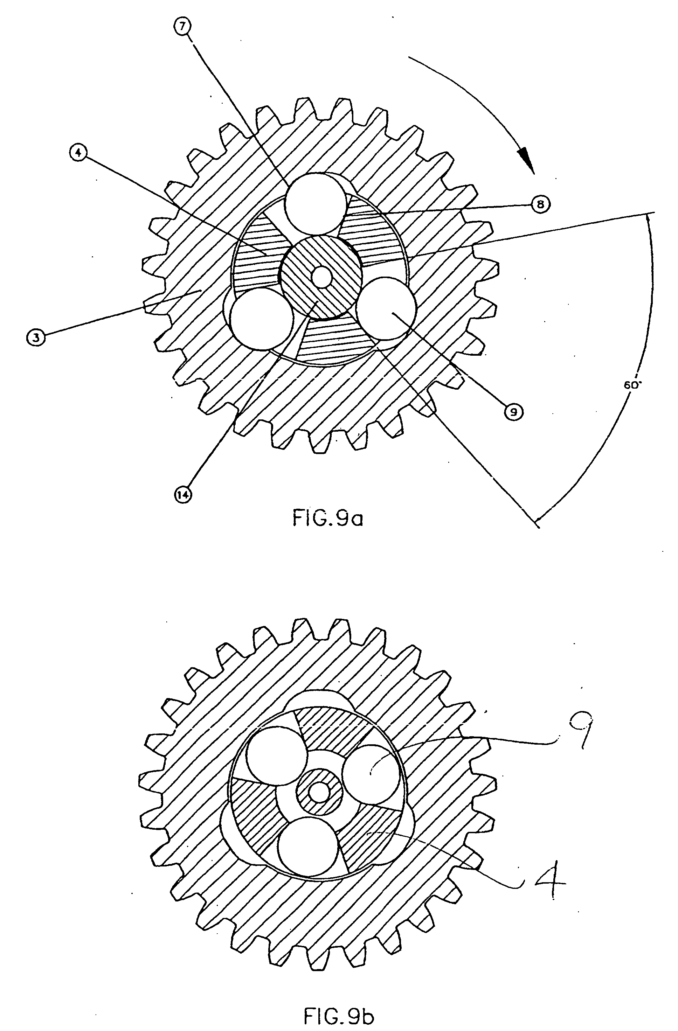

Referring additionally to figure 8, 9, 10 and 11, the locking of the selected sun pinion relative to the spindle 4 is affected by means of a selector spool 14 which pushes and holds three balls 9 radially outwards such that they coact with complementary formations 7 on the internal circumference of the sun pinion 3 and the sides of their mating holes 8 in the spindle. The mating holes 8 for the balls 9 are tapered, the diameter of the holes increasing in direction away from the centre of spindle 4. The minimum diameter of each hole 8 at the surface of the bore in the spindle 4 is less than the diameter of the ball 9 and the maximum diameter at the surface of the spindle 4 is greater than the diameter of the ball for the purpose already described. As also already described, the angle of taper may be varied to alter the resultant forces between sun gear and ball, spindle and ball and spool and ball. This locked position of a sun pinion 3 is shown in figure 9a.

To eliminate neutral positions the holes 8 are chamfered to allow the corresponding balls 9 to move axially and the selector spool 14 is provided with angled end faces so that radially inward forces from the balls can be used to urge the spool to lock one or other of the sun pinions adjacent to the neutral position.

The other sun pinions 1 and 2 are free to rotate as the balls 9 can move radially inwards under the action of the formations 7 on the internal circumference to the extent that these will not cause an interference to lock the sun pinions to the spindle. This unlocked position of a sun pinion in which it may rotate in clockwise direction is shown in figure 9b.

The gear selector assembly 5 is moved axially by rotating an inner sleeve cam 15 which concentrically surrounds the spindle 4. Opposite ends respectively of this inner sleeve cam 1 5 are angled to the plane at right angles to the axis of the spindle 4 and stepped at 16 and 17 to provide three different dwell positions for the gear selector cam follower 18 and pin 19 which coact with the sleeve cam. Pin 19 is mounted in the spindle 4 and the gear selector cam follower 18 forms part of the gear selector assembly 5.

As the sleeve cam 15 is rotated, pin 19 acts as a reaction pin on one end of the sleeve cam and the gear selector assembly 5 is axially displaced against the action of a helical spring 28 through the action of the other end of the sleeve on the gear selector cam follower 18. The three dwell positions correspond to the three axial positions of the gear selector assembly 5.

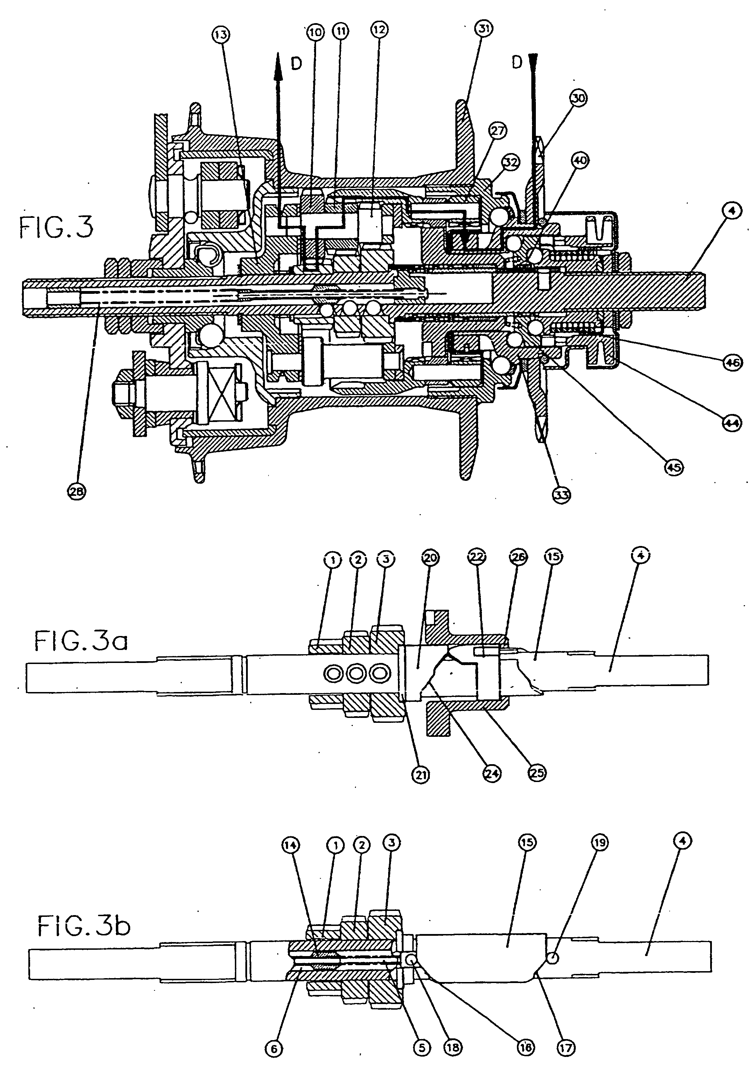

An outer cam 20 is concentrically mounted on the spindle 4. This is restrained both axially and rotationally relatively to the spindle 4. An outer cam follower 22 concentrically surrounds the inner sleeve cam 15. One end of this outer cam follower 22 comprises a cam face 23 which coacts with the cam face 24 of the outer cam 20 in a manner to be described later. Cam face 23 is shown on figures 3a, 4a and 5a. A clutch 25 concentrically surrounds both the outer cam 20 and the outer cam follower 22. The clutch comprises a radially inwardly extending flange 26 which coacts with an abutment face on the outer cam follower 22.

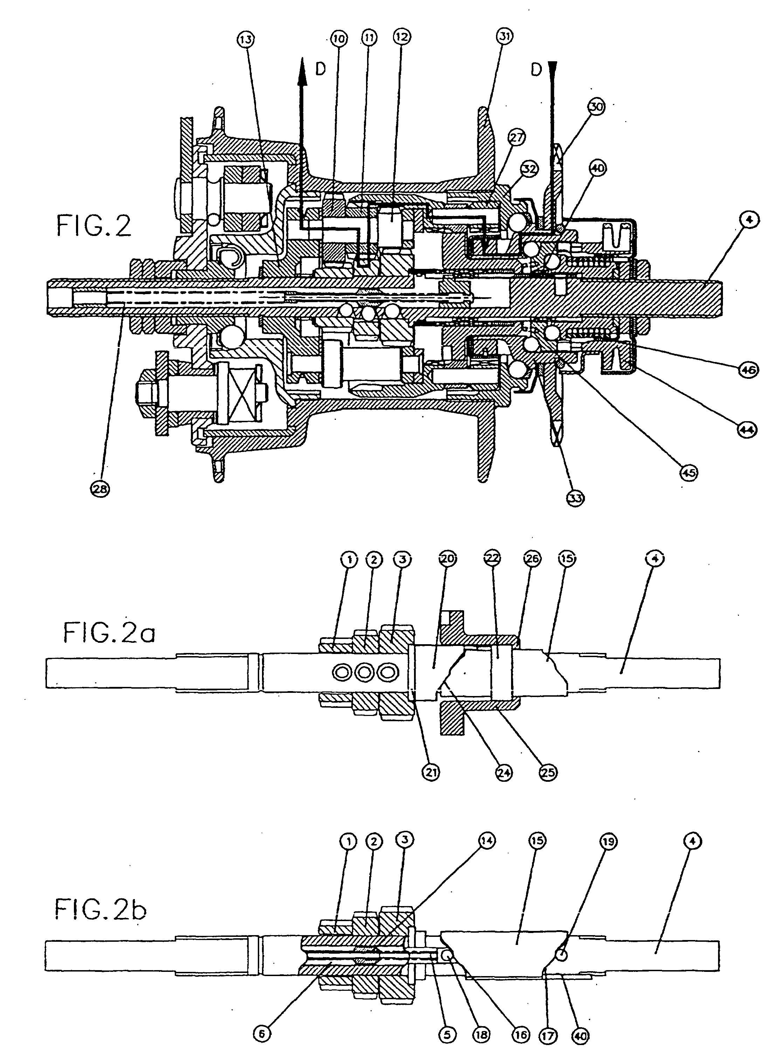

In all of figures 1 to 7 the drive through the gear system is indicated by the letter D. In gears 1 to 3, the gear is selected by respectively locking sun pinions 1,2 or 3 to the spindle 4 by means of the gear selector assembly 5. The drive line then passes through the respective one of the three sun pinions appropriate to the gear selected. In all these three gears, the clutch 25 adopts the same position as can be seen from figures 1 a, 1 b and 1c.

This clutch 25 disengages the pawls in the gear ring 27 so that drive through the gear train is input by the gear ring 27 and output by the planet cage 13 resulting in a gear reduction. The ratio of the gear reduction depends on the number of the teeth on the meshing sun and planet pinions.

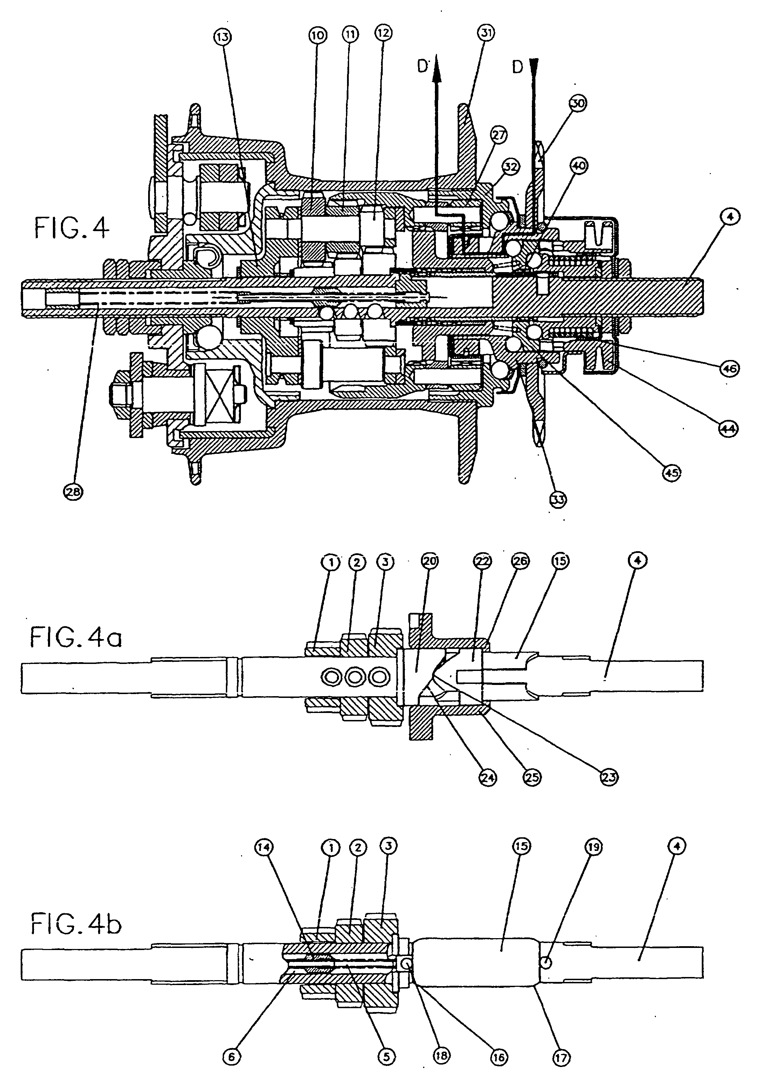

Figures 4, 4a and 4b show the hub in gear 4. In moving from gear 3 to gear 4 the clutch 25 has changed its position in the axial sense under the rotational action of the inner cam 15 moving the cam follower 22 axially against the axial cam face 24 of the outer cam 20 but there is no change in the spacing between gear selector cam follower 18 and pin 19.

The change in position of the clutch 25 allows the pawls in the gear ring 27 to engage drive with hub 31 via ratchet teeth in a ball ring 32.

Therefore in fourth gear, the drive again represented by letter D is direct from sprocket 30 to gear hub 31, not passing through any of the sun pinions 1, 2, and 3 or their corresponding planet pinions. Thus although sun pinion 1 is locked to the spindle 4 by the gear selector assembly 5 and the sun pinions 2 and 3 are free to rotate about the spindle 4 in this gear, none of the sun pinions 1, 2 or 3 take any torque reaction, and none form part of the drive line affecting the resultant gearing.

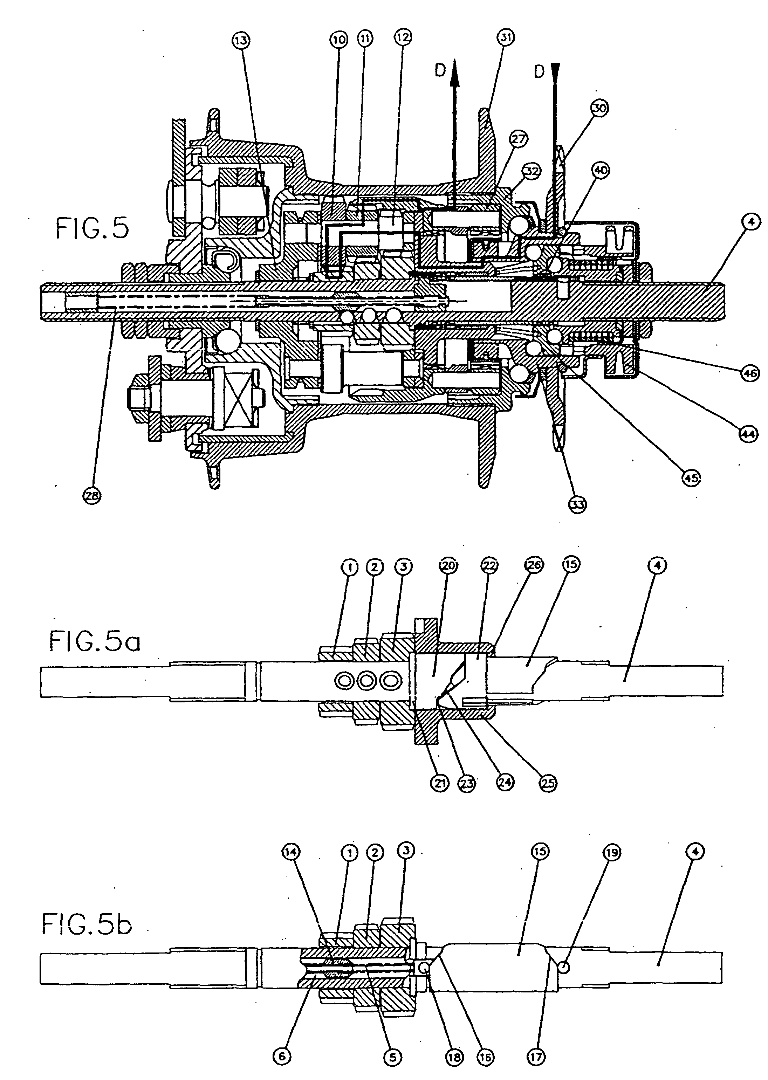

Referring to figures 5, 5a and 5b, to move to gear 5 from gear 4, the inner sleeve cam 15 is rotated further. This further rotation does not result in any change in the spacing between gear selector cam follower 18 and pin 19 (sun pinion 1 being locked to the spindle 4 by the gear selector assembly 5) but the positions of the outer cam follower and the clutch 25 are altered.

The clutch 25 is now engaged with the planet cage 13 and takes the drive directly from the sprocket 30 through the driver 33. Therefore the drive through the gear train is input to the planet cage 13 and output by the gear ring 27 resulting in a gear increase. The ratio of the gear increase depends on the number of teeth on the meshing sun and planet pinions. Therefore drive again shown by letter D passes from the sprocket 30 the hub 31 via sun pinion 1 and planet pinions 11.

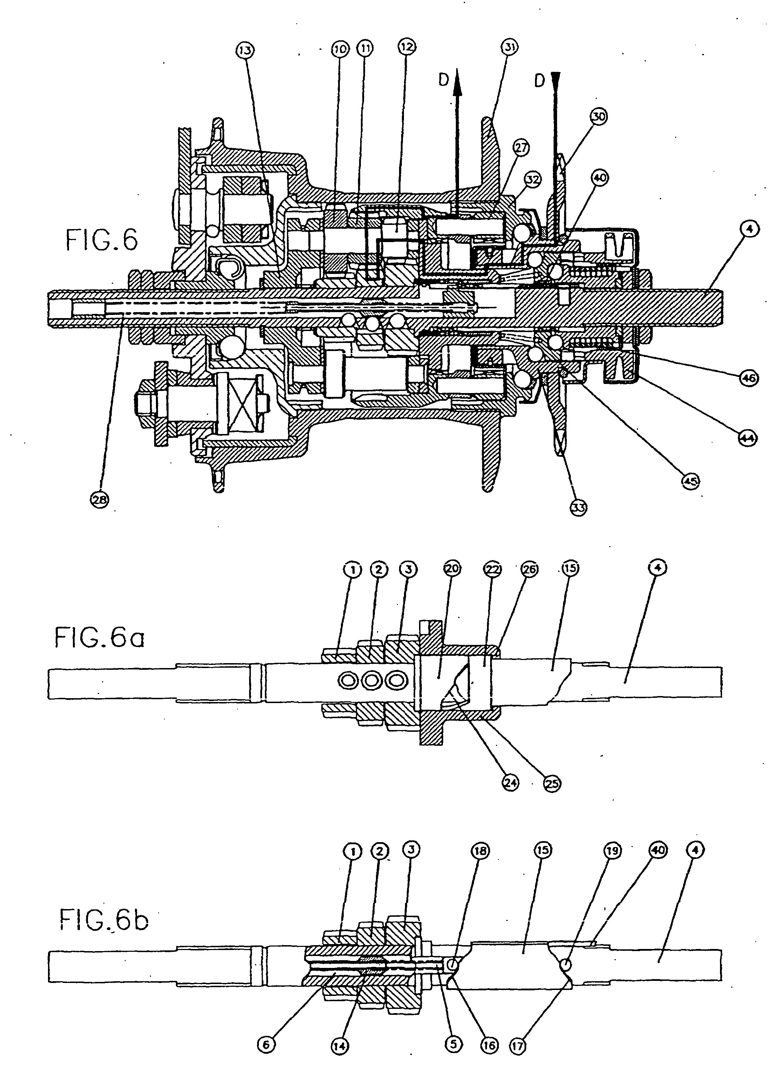

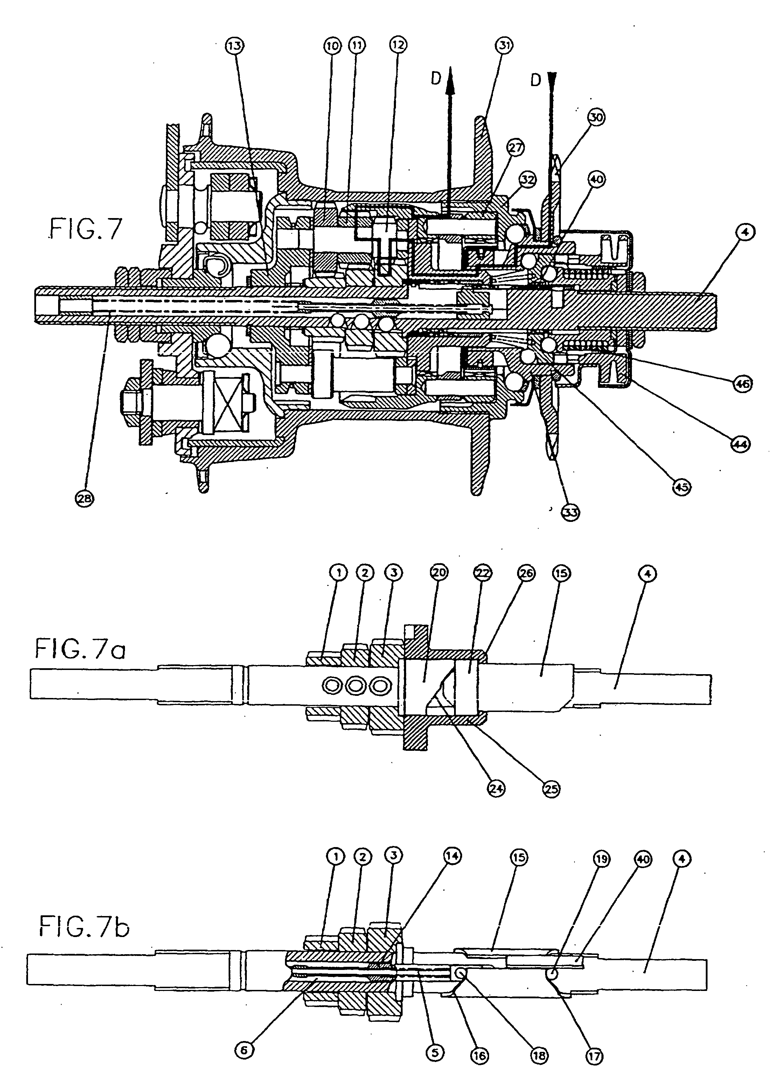

Referring to figures 6, 6a, 6b, 7,7a and 7b, further rotation of the inner sleeve cam 15 results in a change in the spacing between the gear selector cam follower 18 and pin 19 thus once again introducing sun pinon 2 (gear 6) and then sun pinion 3 (gear 7) into the drive line D. Clutch 25 remains in the same position as for gear 5.

Further rotational movement of the inner sleeve cam is prevented by the abutment of a key 40 connected to the sleeve with the pin 19.

Figures 8a and 8b show the gear selector assembly in more detail in isometric view and in section respectively. The gear selector assembly is made up of two main parts which are resiliently urged apart. These parts are the selector spool 14 and the gear selector cam follower 18. These two items are resiliently urged apart by resilient means in the form of a helical spring 42. A stepped ferrule 41 and a rod 43 control the separation distance of the selector spool 14 and the gear selector cam follower 18 of the gear selector assembly and hold the assembly together.

The selector spool 14 is free to slide on the rod 43, axially and rotationally. The gear selector cam follower 18 is fixed securely to the rod 43.

The stepped ferrule 41 is fixed securely to the rod 43 to fix the maximum distance between the selector spool 14 and the gear selector cam follower 18. The resilient gear selector assembly 5 overcomes any tendency of the selector mechanism to jam when the sleeve is rotated to advance the gear selector assembly 5 axially but the gear selector spool 14 cannot advance because the required sun pinion is not in the correct position to accept it. The resilient two part gear selector assembly can be compressed by the movement of the sleeve cam 15 until the sun pinion is in the correct position when the two parts are urged away from one another and the selector spool 14 is urged into operative locking engagement with the required sun pinion.

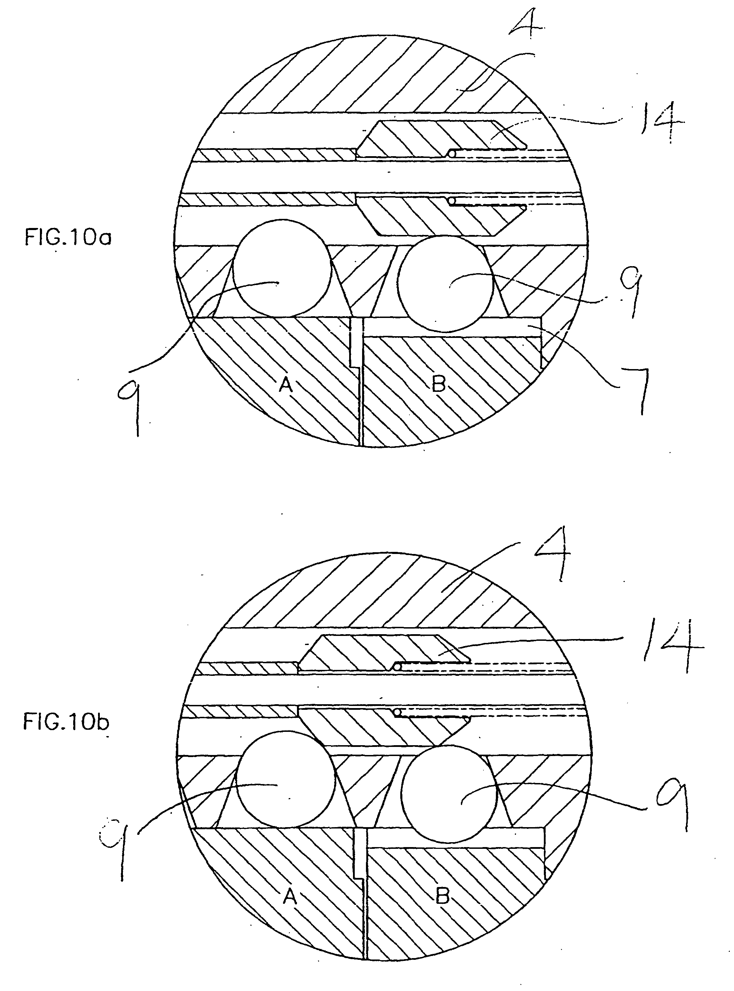

Figures 10a and 10b show an axial cross section through the hub spindle showing the selector spool 14 in more detail. Figure 10a shows the position of the selector spool 14 in its correctly adjusted position locking the gear component B with component A being free to rotate. Figure 10b shows the situation where under the action of the radially inward force from gear component A the ball 9 has axially pushed the selector spool into engagement with the other ball 9 to selectively lock gear component B.

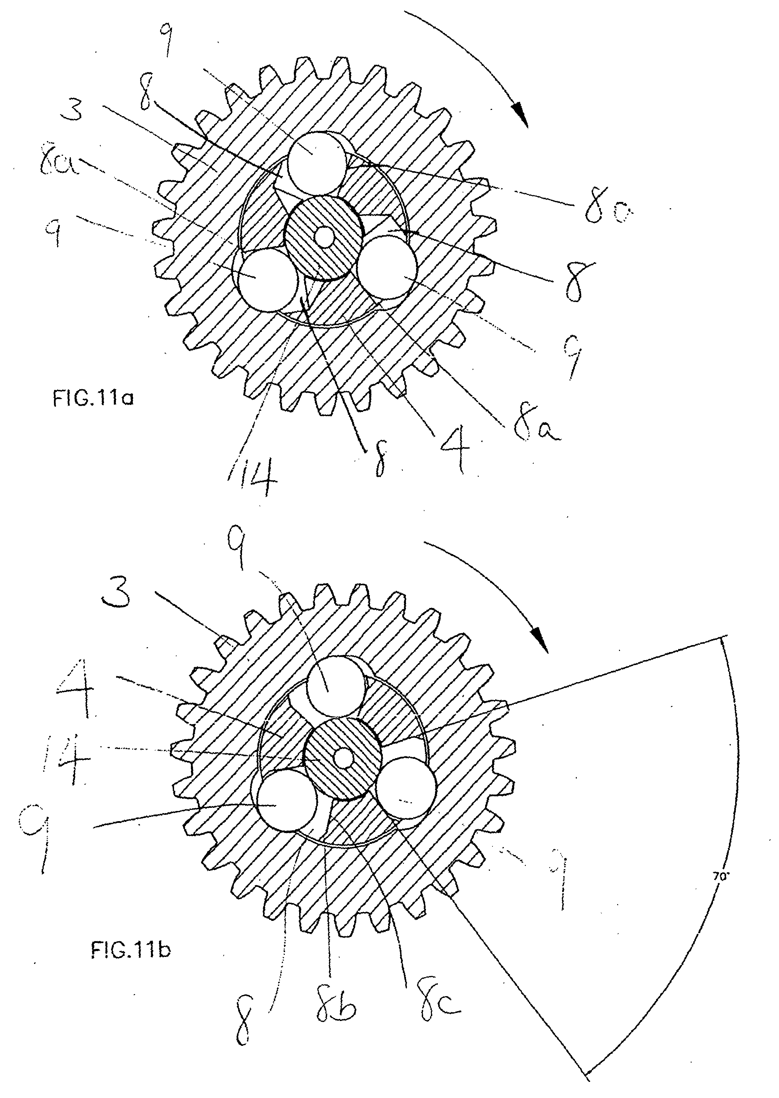

Figure 11a corresponds to figure 9a and shows an alternative to the arrangement illustrated in figure 9a. In this alternative arrangement, the tapered holes 8 are replaced by plane diameter holes 8 machined at an angle to provide similar reaction faces 9a in the axle 4 in the direction shown although the arrangement would not be suitable for locking in the reverse direction. In the arrangement shown in figure 11b, the tapered holes 8 of the arrangement of figure 8a are replaced by holes which are similar to drilled holes in that each has a parallel portion 8b merging into a tapered portion 8c. The tapered portion supports an included angle of 70° although this angle can be varied as desired.

In both the arrangements of figures IIa and IIb the advantage of a tapered hole is achieved but with a reduction in the amount of material removed from the outside surface of the spindle 4. In both figure 11a and 11b parts equivalent to the parts of figure 9a bear the same reference numerals and all these figures show the sun pinion 3 locked to the spindle.

All gear selections are actioned by the rotation of the key 40 around the spindle 4. The key 40 is rotated by the gear change cone 45 which in turn is connected to the drum 44. The drum is rotated by a control cable (not shown). The hub gear change is actioned by axial movements of the control cable rotating the drum 44 in one rotational sense with reverse rotation being achieved with torsional resilient means 46.

The means of rotating the drum 44 and the directions of operation can be modified to suit the application without affecting the operation of the sleeve cams.

It will be appreciated that the above embodiment has been described by way of example only and that many variations are possible without departing from the scope of the invention.

## Claims

1. A multi-speed hub gear comprising a spindle (4), one or more members (1,2,3) mounted on the spindle (4) and means for locking (9) the or one of the members with respect to the spindle, said means comprising one or more balls (9) disposed in respective holes (8) in the spindle and a spool (14) disposed for axial movement with respect to the spindle (4) and operative, in one position, to displace the or each ball (9) in the or each respective hole (8) from a non-locking to a locking position in which the member is non-rotatably locked with respect to the spindle (4) **characterised in that** the or each hole in the spindle is tapered over a substantial portion so that the diameter of the hole increases in the direction radially outwards from the spindle axis.

2. A multi-speed hub gear as claimed in claim 1, in which the or each tapered hole (8) also comprises a parallel sided portion.

3. A multi-speed hub gear as claimed in claim 1 or 2, in which the taper angle is substantially 60°.

4. A multi-speed hub gear as claimed in claim 1 or 2, in which the taper angle is substantially 70°.

5. A multi-speed hub gear comprising a spindle (4), one or more members (1,2,3) mounted on the spindle (4) and means for locking (9) the or one of the members with respect to the spindle, said means comprising one or more balls (9) disposed in respective holes (8) in the spindle and a spool (14) disposed for axial movement with respect to the spindle (4) and operative, in one position, to displace the or each ball (9) in the or each respective hole (8) from a non-locking to a locking position in which the member is non-rotatably locked with respect to the spindle (4) **characterised in that** the or each hole is drilled at an angle to the radial direction to the spindle.

6. A multi-speed hub gear as claimed in any preceding claim, in which the spindle (4) is formed with an axially extending bore (6) in which the spool (14) is disposed for axial movement.

7. A multi-speed hub gear as claimed in any preceding claim, in which the spool (14) has a portion of larger diameter which is operative to contact the or each ball to displace it.

8. A multi-speed hub gear as claimed in any preceding claim, in which said means for locking comprises for the or each member three balls (9).

9. A multi-speed hub gear as claimed in claim 8, in which the three balls (9) are equiangularly spaced about the spindle.

10. A multi-speed hub gear as claimed in any preceding claim, in which minimum diameter of the or each hole (8) is less than that of the or each corresponding ball to prevent the ball (9) interfering with an associated gear selector assembly when the ball is not under load.

11. A multi-speed hub gear as claimed in any preceding claim, in which spool comprises ramps which in operation prevent a neutral gear position.

12. A multi-speed hub gear as claimed in any preceding claim, in which the or each hole is chamfered to allow axial movement of the or each corresponding ball to prevent in operation a neutral gear position.

## Patentansprüche

1. Mehrgangnabenschaltung mit einer Spindel (4), einem oder mehreren auf der Spindel (4) angebrachten Elementen (1, 2, 3) und einer Einrichtung (9) zum Verriegeln des Elements oder der Elemente bezüglich der Spindel, wobei die genannte Einrichtung eine oder mehrere Kugeln (9), die in entsprechenden Löchern (8) in der Spindel angeordnet sind, und eine Spule (14) aufweist, die für eine axiale Bewegung bezüglich der Spindel (4) angeordnet ist und beim Gebrauch in einer Position die oder jede Kugel (9) in dem oder jedem entsprechenden Loch (8) aus einer Nichtverriegelungsstellung in eine Verriegelungsstellung, in der das Element bezüglich der Spindel (4) nicht drehbar verriegelt ist, verschiebt, **dadurch gekennzeichnet, dass** das oder jedes Loch in der Spindel über einen wesentlichen Abschnitt derart verjüngt ist, dass der Durchmesser des Lochs in radialer Richtung nach außen von der Spindelachse aus zunimmt.

2. Mehrgangnabenschaltung nach Anspruch 1, in der das oder jedes verjüngte Loch (8) auch einen Abschnitt mit parallelen Seiten aufweist.

3. Mehrgangnabenschaltung nach Anspruch 1 oder 2, in welcher der Verjüngungswinkel im Wesentlichen 60° beträgt.

4. Mehrgangnabenschaltung nach Anspruch 1 oder 2, in welcher der Verjüngungswinkel im Wesentlichen 70° beträgt.

5. Mehrgangnabenschaltung mit einer Spindel (4), einem oder mehreren auf der Spindel (4) angebrachten Elementen (1, 2, 3) und einer Einrichtung (9) zum Verriegeln des oder der Elemente bezüglich der Spindel, wobei die genannte Einrichtung eine oder mehrere Kugeln (9), die in entsprechenden Löchern (8) in der Spindel angeordnet sind, und eine Spule (14) aufweist, die für eine axiale Bewegung bezüglich der Spindel (4) angeordnet ist und beim Gebrauch in einer Position die oder jede Kugel (9) in dem oder jedem entsprechenden Loch (8) aus einer Nichtverriegelungsstellung in eine Verriegelungsstellung verschiebt, in der das Element bezüglich der Spindel (4) nicht drehbar verriegelt ist, **dadurch gekennzeichnet, dass** das oder jedes Loch in einem Winkel zur radialen Richtung bezüglich der Spindel gebohrt ist.

6. Mehrgangnabenschaltung nach einem der vorstehenden Ansprüche, in der die Spindel (4) mit einer axial sich erstreckenden Bohrung (6) ausgebildet ist, in welcher die Spule (14) für eine axiale Bewegung angeordnet ist.

7. Mehrgangnabenschaltung nach einem der vorstehenden Ansprüche, in der die Spule (14) einen Abschnitt mit einem größeren Durchmesser aufweist, der für einen Kontakt mit der oder jeder Kugel fungiert, um sie zu verschieben.

8. Mehrgangnabenschaltung nach einem der vorstehenden Ansprüche, in der die genannte Einrichtung zum Verriegeln für das oder jedes Element drei Kugeln (9) aufweist.

9. Mehrgangnabenschaltung nach Anspruch 8, in der die drei Kugeln (9) in gleichen Winkeln um die Spindel herum beabstandet sind.

10. Mehrgangnabenschaltung nach einem der vorstehenden Ansprüche, in welcher der Minimaldurchmesser des oder jedes Lochs (8) kleiner ist als jener der oder jeder entsprechenden Kugel bemessen ist, um zu verhindern, dass die Kugel (9) eine Gangwahlanordnung stört, wenn die Kugel nicht unter Belastung steht.

11. Mehrgangnabenschaltung nach einem der vorstehenden Ansprüche, in der die Spule schiefe Ebenen aufweist, die beim Gebrauch eine neutrale Gangstellung verhindern.

12. Mehrgangnabenschaltung nach einem der vorstehenden Ansprüche, in der das oder jedes Loch abgeschrägt ist, um eine axiale Bewegung der oder jeder entsprechenden Kugel zu ermöglichen, um beim Gebrauch eine neutrale Gangstellung zu verhindern.

## Revendications

1. Moyeu à multivitesse comprenant un arbre (4), un ou plusieurs éléments (1, 2, 3) montés sur l'arbre (4) et des moyens pour bloquer (9) le ou un des éléments par rapport à l'arbre, lesdits moyens comprenant une ou plusieurs billes (9) logées dans des cavités respectives (8) dans l'arbre et une bague (14) disposée pour pouvoir effectuer un mouvement en direction axiale par rapport à l'arbre (4) et opérante, dans une position donnée, pour déplacer la ou chacune des billes (9) dans la ou chacune des cavités respectives (8), d'une position non-bloquée à une position bloquée, dans laquelle l'élément est bloqué en position de non-rotation par rapport à l'arbre (4), **caractérisé en ce que** la ou chacune des cavités de l'arbre est chanfreinée sur une grande partie de celles-ci de sorte que le diamètre de la cavité augmente depuis l'axe de l'arbre (4) en direction radiale vers l'extérieur.

2. Moyeu à multivitesse selon la revendication 1, dans lequel la ou chacune des cavités chanfreinées (8) comprend également une partie latérale à faces parallèles.

3. Moyeu à multivitesse selon la revendication 1 ou 2, dans lequel l'angle conique est approximativement de 60°.

4. Moyeu à multivitesse selon la revendication 1 ou 2, dans lequel l'angle conique est approximativement de 70°.

5. Moyeu à multivitesse comprenant un arbre (4), un ou plusieurs éléments (1, 2, 3) montés sur l'arbre (4) et des moyens (9) pour bloquer l'élément ou un des éléments par rapport à l'arbre, lesdits moyens comprenant une ou plusieurs billes (9) logées dans des cavités respectives (8) de l'arbre et une bague (14)disposée pour pouvoir effectuer un mouvement en direction axiale par rapport à l'arbre (4) et opérante dans une position pour déplacer la ou chacune des billes (9) dans la ou chacune des cavités respectives (8), depuis une position non-bloquée vers une position bloquée dans laquelle l'élément est bloqué en position de non rotation par rapport à l'arbre (4), **caractérisé en ce que** la ou chacune des cavités est percée à un angle suivant une direction radiale par rapport à l'arbre.

6. Moyeu à multivitesse selon l'une quelconque des revendications précédentes, dans lequel l'arbre (4) comporte un perçage (6) se développant en direction axiale dans lequel la bague (14) est disposée pour pouvoir effectuer un mouvement en direction axiale.

7. Moyeu à multivitesse, selon l'une quelconque des revendications précédentes, dans lequel la bague (14) présente une partie de diamètre plus grand, opérante à assurer un contact avec l'une ou chacune des billes pour les déplacer.

8. Moyeu à multivitesse, selon l'une quelconque des revendications précédentes, dans lequel lesdits moyens de blocage comprennent pour le ou chacun des éléments, trois billes (9).

9. Moyeu à multivitesse, selon la revendication 8, dans lequel les trois billes (9) sont réparties à angle égal autour de l'arbre.

10. Moyeu à multivitesse selon l'une quelconque revendication précédente, dans lequel le diamètre minimum de la ou chacune des cavités (8) est inférieur à celui de la ou chacune des billes correspondantes afin d'empêcher les billes (9) d'interférer avec un ensemble de sélecteur à engrenage associé lorsque la bille n'est pas en charge.

11. Moyeu à multivitesse selon l'une quelconque des revendications précédentes, dans lequel la bague comprend des rampes empêchant le moyeu d'occuper une position neutre en cours de fonctionnement.

12. Moyeu à multivitesse selon l'une quelconque des revendications précédentes, dans lequel la ou chacune des cavités est chanfreinée pour permettre un mouvement en direction axiale de la ou chaque bille correspondante pour empêcher le moyeu d'occuper une position neutre en cours de fonctionnement.
